# EUROPÄISCHE PATENTANMELDUNG

(11) **EP 3 702 204 A1**
(43) Veröffentlichungstag der Anmeldung: **02.09.2020**
(21) Anmeldenummer: 19020094.9
(22) Anmeldetag: 27.02.2019
(51) Int. Cl.: B60M 1/28, B60M 1/30

(54) **EINFETTVERFAHREN**

(71) Anmelder: Furrer + Frey AG, 3005 Bern (CH)
(72) Erfinder: CASALI, Bruno, 3125 Toffen (CH)
(74) Vertreter: von Bülow & Tamada

(57) **Zusammenfassung**

Die Erfindung betrifft ein Verfahren zum Einfetten eines Fahrdrahtes (14) zur elektrischen Energieversorgung eines Pantographen eines Schienenfahrzeuges, umfassend:
- Einlegen des Fahrdrahtes (14) in eine Durchgangsöffnung (25) eines sich in einer Längsrichtung (1), einer rechtwinklig zur Längsrichtung (1) liegenden Querrichtung (11) und einer rechtwinklig zur Längsrichtung (1) und rechtwinklig zur Querrichtung (11) liegenden Höhenrichtung (9) erstreckenden Grundkörpers (21), wobei die Durchgangsöffnung (25) den Grundkörper (21) in der Längsrichtung (1) gesehen von einer Vorderseite zu einer in der Längsrichtung (1) gesehenen Rückseite hin durchdringt, und
- Beschleunigen des Grundkörpers (21) in der Längsrichtung (1), so dass der Fahrdraht (14) durch die Durchgangsrichtung bewegt wird, **gekennzeichnet durch**
- Einleiten von Fett (54) in die Durchgangsöffnung (25), durch die sich der Fahrdraht (14) bewegt mit einer Zufuhrrate (59), bei der das eingeleitete Fett (54) an der Rückseite des Grundkörpers (21) aus der Durchgangsöffnung (25) mit einer vorbestimmten Bedingung (63) austritt.

## Beschreibung

Die vorliegende Erfindung betrifft ein Verfahren zum Einfetten eines Fahrdrahtes zur elektrischen Energieversorgung eines Pantographen eines Schienenfahrzeuges und eine Einfettvorrichtung zum Einsatz in dem Verfahren.

Aus der ES 2 409 085 A2 ist ein zum Einfetten eines Fahrdrahtes zur elektrischen Energieversorgung eines Pantographen eines Schienenfahrzeuges und eine Einfettvorrichtung zum Einsatz in dem Verfahren bekannt.

Aufgabe der Erfindung ist es, das bekannte Verfahren und die bekannte Einfettvorrichtung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst ein Verfahren zum Einfetten eines Fahrdrahtes zur elektrischen Energieversorgung eines Pantographen eines Schienenfahrzeuges die Schritte Einlegen des Fahrdrahtes in eine Durchgangsöffnung eines sich in einer Längsrichtung, einer rechtwinklig zur Längsrichtung liegenden Querrichtung und einer rechtwinklig zur Längsrichtung und rechtwinklig zur Querrichtung liegenden Höhenrichtung erstreckenden Grundkörpers, wobei die Durchgangsöffnung den Grundkörper in der Längsrichtung gesehen von einer Vorderseite zu einer in der Längsrichtung gesehenen Rückseite hin durchdringt, Beschleunigen des Grundkörpers in der Längsrichtung, so dass der Fahrdraht durch die Durchgangsrichtung bewegt wird und Einleiten von Fett in die Durchgangsöffnung, durch die sich der Fahrdraht bewegt mit einer Zufuhrrate, bei der das eingeleitete Fett an der Rückseite des Grundkörpers aus der Durchgangsöffnung mit einer vorbestimmten Bedingung austritt.

Dem angegebenen Verfahren liegt die Überlegung zugrunde, dass das Fett auf den Fahrdraht mit einer vorbestimmten Struktur, vor allem hinsichtlich seiner Schichtstärke aufgebracht werden sollte, um einen wirksamen Schutz zu gewährleisten. In dem eingangs genannten Verfahren allerdings, wird das Fett mittels Bürsten aufgetragen, was zwar grundsätzlich einen Fettauftrag auf den Fahrdraht ermöglicht, allerdings nicht gleichmäßig, weil die Bürsten das Fett mit Schlieren auf dem Fahrdraht verteilen, so dass das aufgetragene Fett in seiner Schichtdicke variiert und an einigen Stellen sogar kaum vorhanden ist.

Hier greift das angegebene Verfahren mit der Überlegung an, dass die Durchgangsöffnung für das aufzutragende Fett einen Speicher darstellt, der das aufzutragende Fett nach dem Volllaufen mit der gleichen Geschwindigkeit ausgibt, wie es zugeführt wird. In diesem Zustand kann davon ausgegangen werden, dass die Durchgangsöffnung vollständig mit Fett gefüllt ist, so dass der durch die Durchgangsöffnung gezogene Fahrdraht gleichmäßig mit Fett beschichtet wird. Anders als im eingangs genannten Verfahren wird daher eine Fettschicht mit einer konstanten Schichtdicke erreicht, die den Fahrdraht lückenlos schützt.

In einer Weiterbildung des angegebenen Verfahrens ist das an der Rückseite des Grundkörpers aus der Durchgangsöffnung austretende Fett bei der vorbestimmten Bedingung frei von Bewegungskomponenten winklig zur Längsrichtung. Auf diese Weise ist sichergestellt, dass das aufzutragende Fett mit genau der Geschwindigkeit und Menge in die Durchgangsöffnung eingeleitet wird, mit der es zum Auftragen auf den Fahrdraht auch verbraucht wird.

In einer besonderen Weiterbildung des angegebenen Verfahrens wird die Zufuhrrate in Abhängigkeit der Beschleunigung des Grundkörpers in der Längsrichtung erhöht, so dass Geschwindigkeitsänderungen bei der Zufuhr des Fettes mit berücksichtigt werden und nicht unbeabsichtigt zu einer Verschwendung von Fett führen.

In einer anderen Weiterbildung des angegebenen Verfahrens wird vor dem Einleiten von Fett in die Durchgangsöffnung zwischen einer Einleitestelle und der Rückseite des Grundkörpers in die Durchgangsöffnung ein Querschnitt der Durchgangsöffnung verjüngendes Verjüngungselement eingesetzt. Dieses Verjüngungselement dient als Düse nicht nur dazu einen geeigneten Druck zum optimalen Fettauftrag in der Durchgangsöffnung aufzubauen, über das Verjüngungselement kann auch eine Schichtdicke des aufzutragenden Fettes gesteuert werden.

In einer noch anderen Weiterbildung des angegebenen Verfahrens wird das in die Durchgangsöffnung einzuleitende Fett durch eine Armatur geleitet, die zur Reduktion der Zufuhrrate betätigt wird. Die Betätigung kann dabei manuell durch Bedienpersonal oder elektronisch im Rahmen einer Steuerung und/oder Regelung erfolgen.

Gemäß einem weiteren Aspekt der Erfindung umfasst eine Einfettvorrichtung zum Einsatz in einem der angegebenen Verfahren den Grundkörper mit der Durchgangsöffnung, durch die der Fahrdraht in der Längsrichtung durchschiebbar ist, und die in die Durchgangsöffnung führende Versorgungsleitung, sowie ein aus Sicht der Durchgangssöffnung vor der Versorgungsleitung angeordnete Armatur zum Einstellen der Zufuhrrate.

In einer Weiterbildung der angegebenen Einfettvorrichtung ist die Armatur ein Absperrventil, das vorzugsweise als Schieberschlüssel einen um eine Drehachse drehbaren Hebel mit einer Länge von mindestens 5 cm umfasst. Auf diese Weise lässt sich die Zufuhrrate auf die eingangs genannte vorbestimmte Bedingung durch Bedienpersonal in sehr feinfühliger Weise abstimmen.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Ansicht einer Fahrstrecke mit einer Stromschiene, in der ein Fahrdraht gehalten ist,
Fig. 2 eine schematische Ansicht einer Fettmanschette zum Einfetten des Fahrdrahtes aus der Fig. 1 aus einer ersten Perspektive,
Fig. 3 eine schematische Ansicht der Fettmanschette aus Fig. 2 aus einer zweiten Perspektive,
Fig. 4 eine schematische Ansicht der Fettmanschette aus Fig. 2 und 3 im Einsatz, und
Fig. 5 eine weitere schematische Ansicht der Fettmanschette aus Fig. 2 und 3 im Einsatz,
Fig. 6 ein Diagramm, in dem eine Zufuhrrate an Fett in die Fettmanschette der Fig. 2 und 3 über die Zeit dargestellt ist, und
Fig. 7 ein Ablaufdiagramm eines Verfahrens zur Verwendung der Fettmanschette der Fig. 2 und 3.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

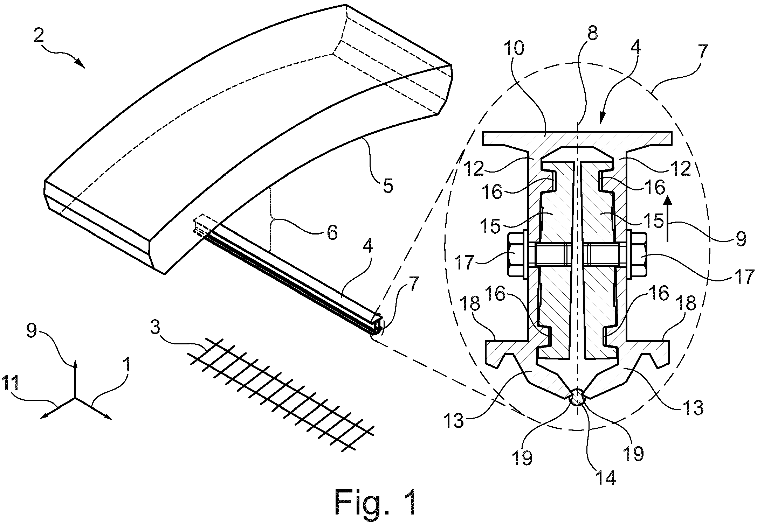

Es wird auf Fig. 1 Bezug genommen, die eine sich in einer Fahrtrichtung 1 oder Längsrichtung 1 erstreckende Fahrstrecke 2 mit einem Gleis 3 zeigt, auf der sich ein nicht gezeigter Zug elektrisch angetrieben geführt durch das Gleis 3 bewegen kann. Zur elektrischen Energieversorgung des Zuges ist in einer nicht weiter referenzierten Höhe über dem Gleis 3 eine sich ebenfalls in der Längsrichtung 1 erstreckende Stromschiene 4 angeordnet, aus der der Zug mit einem nicht weiter dargestellten Pantographen elektrischen Strom in an sich bekannter Weise entnehmen kann.

Die Stromschiene 4 ist an einem Träger aufgehängt, der in der Fig. 1 in beispielhafter Form einer Decke 5 dargestellt ist. Die Decke 5 könnte beispielsweise Teil eines Tunnels oder einer Brücke sein. Die Stromschiene 4 lässt sich über nicht weiter dargestellte Aufhängemittel in einem Aufhängeabstand 6 zur Decke 5 halten.

In Fig. 1 ist das Profil 7 der Stromschiene 4 vergrößert dargestellt.

Im Profil 7 gesehen ist die Stromschiene 4 achsensymmetrisch zu einer Profilachse 8 ausgebildet. Die Profilachse 8 verläuft dabei parallel zu einer Höhenrichtung 9 der Fahrstrecke 2. In der Höhenrichtung 9 gesehen befindet sich an der Oberseite der Stromschiene 4 ein Querarm 10, von dem sich in einer rechtwinklig zur Längsrichtung 1 und rechtwinklig zur Höhenrichtung 9 verlaufenden Querrichtung 11 gesehen beabstandet zueinander zwei Spannarme 12 entgegen der Höhenrichtung 9 erstrecken. An das dem Querarm 10 gegenüberliegende Ende eines jeden Spannarms 12 schließt sich je ein Klemmarm 13 an, zwischen denen ein Fahrdraht 14 eingeklemmt durch die Spannarme 12 gehalten ist.

Die in Fig. 1 gezeigte Stromschiene 4 wird gewöhnlich aus einer Vielzahl an Stromschienenabschnitten zusammengesetzt, die im Profil 7 der Fig. 1 gesehen stirnseitig über Stoßlaschen 15 exakt aufeinander ausgerichtet aneinander gelegt und werden. Die gegenseitige Ausrichtung erfolgt über einen in Höhenrichtung 9 wirkenden Formschluss zwischen den Stoßlaschen 15 und den Stromschienenabschnitten, der in Fig. 1 als Feder-Nut-Verbindung 16 ausgeführt ist. Zur Fixierung der einzelnen Stromschienenabschnitte gegeneinander lassen sich in die Stoßlaschen 15 Schrauben 17 einschrauben.

Um den Fahrdraht 14 zwischen den Klemmarmen 13 einzuklemmen, schließen sich an einer Verbindungsstelle zwischen dem Klemmarmen 13 und den Spannarmen 12 sich in beziehungsweise entgegen der Querrichtung 11 erstreckende Fahrstraßen 18 an, auf dem sich ein nicht weiter gezeigter Fädelwagen bewegen kann.

Sammelt sich an den resultierenden Klemmstellen 19 Wasser an, bilden sich Redoxreaktionen herbeiführende Lokalelemente. Aufgrund der Materialwahl in handelsüblichen Stromschienen ist der Abstand der Metalle an den Klemmstellen 19 in der elektrochemischen Spannungsreihe ausreichend groß, um bei dortigen Wasseransammlungen Verwitterungserscheinungen herbeizuführen. Zwar wurden bereits verschiedene Ansätze vorgeschlagen, die Wasseransammlungen zu reduzieren, um die Entstehung von Lokalelementen zu vermeiden, so zum Beispiel gemäß WO 2014/067989 A1 mit Entwässerungsöffnungen. Allerdings lässt sich das Auftreten von Wasser nie ganz vermeiden, weshalb es ein sinnvollerer Weg ist, die Klemmstellen 19 aktiv vor Wasser zu schützen.

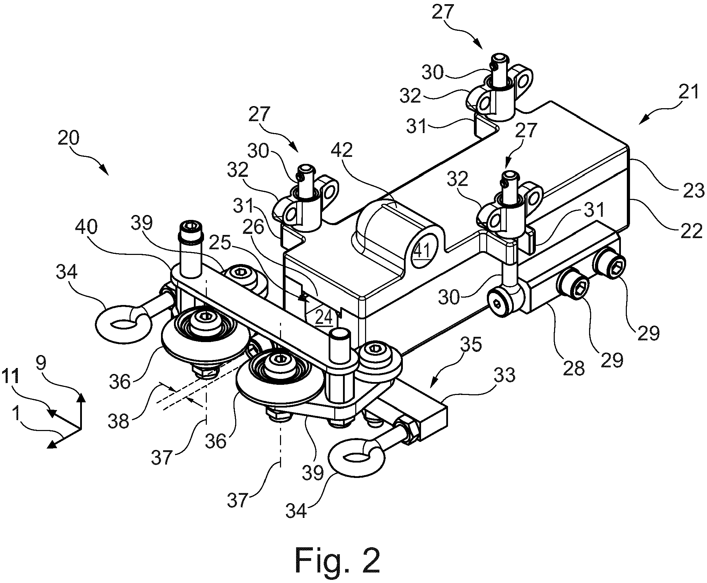

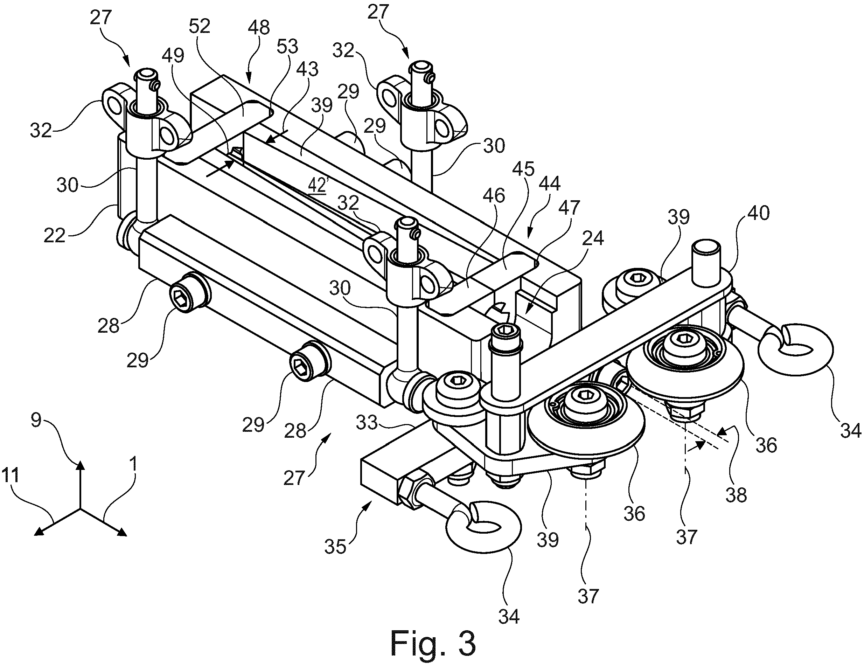

Hierzu wird eine in den Fig. 2 und 3 abgebildete Einfettvorrichtung 20, auch Fettmanschette genannt, vorgeschlagen, die den Fahrdraht 14 im Bereich der Klemmstellen 19 unmittelbar vor dem Einklemmen durch den Fädelwagen in der Stromschiene 4 mit Fett beschichtet, so dass an die Klemmstellen 19 nach dem Einklemmen des Fahrdrahtes 14 in der Stromschiene 4 kein Wasser mehr herantreten kann, welches die Stromschiene 4 und den Fahrdraht 14 überbrückt und so Lokalelemente bildet. Bevor die Verwendung der Einfettvorrichtung 20 im Einzelnen beschrieben wird, soll zunächst ihr Aufbau erläutert werden.

Die Einfettvorrichtung 20 umfasst einen Grundkörper 21, der sich unter anderem aus einem Führungskörperteil 22 und einem Abdeckteil 23 zusammensetzt.

Auf einer in der Höhenrichtung 9 gesehenen Oberseite des Führungskörperteils 22 ist eine Nut 24 eingeformt, die sich in der Längsrichtung 1 erstreckt. Die Nut 24 ist an den nicht weiter referenzierten Stirnseiten des Führungskörperteiles 22 in der Längsrichtung 1 gesehen geöffnet, so dass sich in die Nut 24 der Fahrdraht 14 einlegen lässt.

Auf die in der Höhenrichtung 9 gesehene Oberseite des Führungskörperteils 22 ist das Abdeckteil 23 aufgesetzt, so dass die Nut 24 verschlossen ist und eine Durchgangsöffnung 25 durch den Grundkörper 21 bildet. Zum lagegenauen Aufsetzen des Abdeckteils 23 auf dem Führungskörperteil 22 können am Abdeckteil 23 im Bereich der nicht weiter referenzierten Stirnseiten des Grundkörpers 21 in der Längsrichtung 1 gesehen je ein Positionierungsvorsprung 26 ausgebildet sein. Diese Positionierungsvorsprünge 26 greifen beim Aufsetzen des Abdeckteils 23 auf das Führungskörperteil 22 in der Querrichtung 11 gesehen formschlüssig in die Nut 24 ein. Das auf das Führungskörperteil 22 aufgesetzte Abdeckteil 23 wird dann über drei Schraubverbindungen 27 kraftschlüssig am Führungskörperteil 22 befestigt. Dabei sind am Grundkörper 21 in der Querrichtung 11 gesehen auf der Hinterseite eine Schraubverbindung 27 angeordnet, während an der Vorderseite zwei Schraubverbindungen 27 angeordnet sind.

Jede Schraubverbindung 27 umfasst eine sich in der Längsrichtung 1 erstreckende Befestigungsleiste 28, wobei die Befestigungsleisten 28 der Schraubverbindungen 27 an der in der Querrichtung 11 gesehenen Vorderseite des Grundkörpers 21 einstückig ausgebildet sind. Die Befestigungsleisten 28 sind mittels Schrauben 29 am Führungskörperteil 22 befestigt. An eine in der Längsrichtung 1 gesehene Stirnseite jeder Befestigungsleiste 28 schließt sich eine verschwenkbar um die Längsrichtung 1 gehaltene Gewindestange 30 an, die sich in je ein Gabelelement 31 am Abdeckteil 23 einschwenken lassen. Im Zustand, in dem die Gewindestangen 30 in die Gabelelemente 31 eingeschwenkt sind, wird je eine Flügelmutter 32 zur jeweiligen Befestigungsleiste 28 hin auf das jeweilige Gabelelement 31 aufgeschraubt, so dass das Abdeckteil 23 auf das Führungskörperteil 22 gedrückt wird, was die zuvor genannte kraftschlüssige Verbindung herstellt. Um einen Verlust der Flügelmuttern 32 im demontierten Zustand der Einfettvorrichtung 20 zu vermeiden, können am in der Höhenrichtung 9 gesehenen oberen Ende der Gewindestangen 30 der Übersichtlichkeit halber nicht weiter referenzierte Bewegungsbegrenzungsmittel ausgebildet sein.

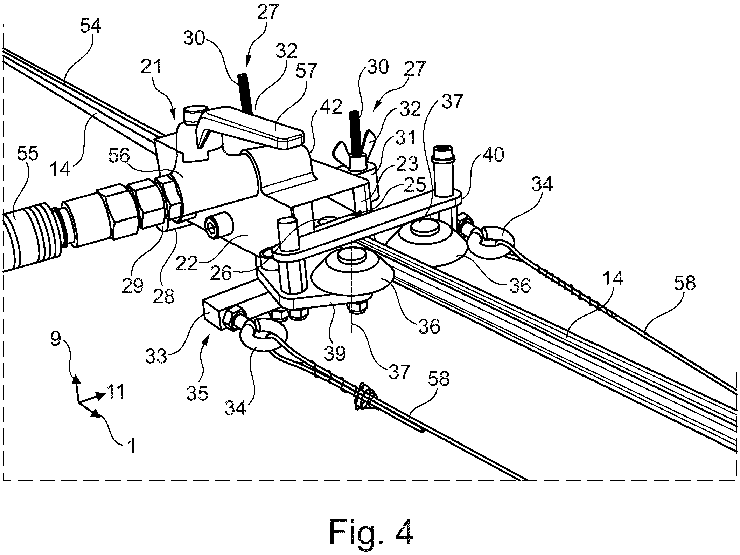

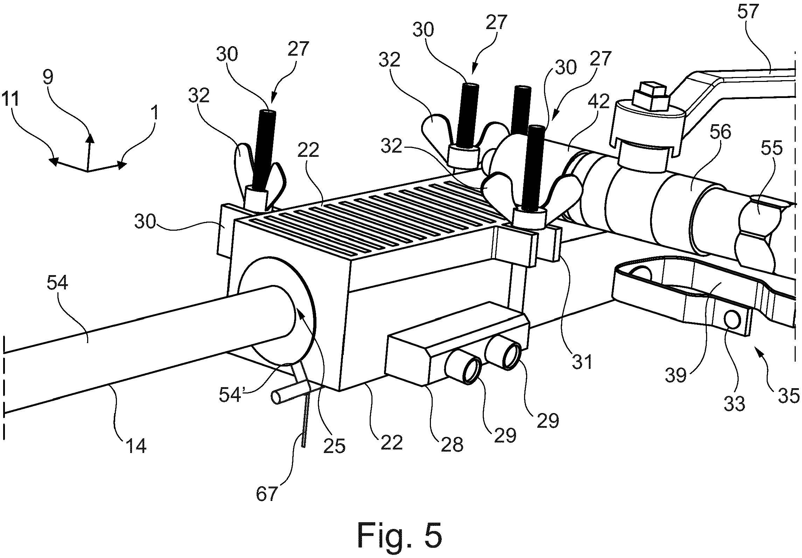

Zum Ziehen der Einfettvorrichtung 20 besitzt diese an der in der Längsrichtung 1 gesehenen vorderen Stirnseite des Grundkörpers 21 einen in der Querrichtung 11 ausgerichteten Waagbalken 33, auch Waagscheit genannt. An den in der Querrichtung 11 gesehenen Enden des Waagbalkens 33 sind in der Längsrichtung 1 ausgerichtete Halteelemente in Form von Ösenschrauben 34. Der Waagbalken 33 sowie die Ösenschrauben 34 bilden gemeinsam ein Anschlusselement 35, über das sich die Einfettvorrichtung 20 an einen Zugmechanismus anschließen und über den Fahrdraht 14 in der Längsrichtung 1 ziehen lässt. Auf diesen Zugmechanismus wir später im Zusammenhang der Fig. 4 und 5 näher eingegangen.

Auf dem Waagbalken 33 sind zwischen den beiden Ösenschrauben 34 zwei Umlenkrollen 36 um je eine Drehachse 37 drehbar gehalten, welche in der Höhenrichtung 9 ausgerichtet sind. Ferner sind die Umlenkrollen 36 Querrichtung 11 mit einem Rollenabstand 38 beabstandet zueinander gesehen angeordnet. Dabei sind die Umlenkrollen 36 gesehen von einer in der Höhenrichtung 9 gesehenen Unterseite des Grundkörpers 21 auf einer nicht weiter referenzierten Höhe angeordnet, die gleich einer ebenfalls nicht referenzierten Höhe der Durchgangsöffnung 25 ist, so dass sich der Fahrdraht 14 beim Ziehen der Einfettvorrichtung 20 in einer Kurve des Gleises 3 über die Umlenkrollen 36 geführt in einer vorbestimmten Drehlage um die Längsrichtung 1 in die Durchgangsöffnung 25 einführen lässt. Die Umlenkrollen 36 sind dabei je auf einem Schwenkarm 39 gehalten, so dass sich die Lage der Umlenkrollen 36 in der Querrichtung 11 an Querbewegungen des Fahrdrahtes 14 anpassen lässt. Um den Rollenabstand 38 dabei konstant zu halten, sind die Schwenkarme 39 über eine Koppelstange 40 miteinander verbunden.

Das auf den Fahrdraht aufzutragende Fett wird in die Durchgangsöffnung 25 der Einfettvorrichtung 20 über eine Versorgungsleitung 41 eingeleitet. Die Versorgungsleitung 41 führt durch eine Anschlussbuchse 42, wie auf einer in der Höhenrichtung 9 gesehenen Oberseite des Abdeckteils 23 angeordnet ist. An die Anschlussbuchse 42 lässt sich eine Zufuhrleitung anschließen, die das Fett aus einer nicht weiter gezeigten Quelle in die Versorgungsleitung 41 einspeist. Zwischen der Quelle und der Anschlussbuchse 42 wird zur Steuerung der zugeführten Fettmenge ein Hahn angeordnet. Sowohl auf die Zufuhrleitung als auch auf den Hahn wird im Zusammenhang mit den Fig. 4 und 5 näher eingegangen.

Der Fahrdraht 14 ist in der Praxis sehr lang und wird bei der Montage auf der Fahrstrecke 2 nach dem Einfetten sofort über den Fädelwagen in der Stromschiene 4 eingeklemmt. Daher ist es schwierig, den Fahrdraht in der Längsrichtung 1 gesehen stirnseitig in die Durchgangsöffnung 25 einzufädeln. Das Anlegen der Einfettvorrichtung 20 an den Fahrdraht 14 ist deshalb in der vorliegenden Ausführung in einer zweckmäßigeren Weise realisiert. Ferner besitzt Einfettvorrichtung 20 weitere Elemente, die in dem später zu beschreibenden Einsatz einen besonders effektiven Auftrag von Fett auf den Fahrdraht 14 ermöglichen.

Die Durchgangsöffnung 25 weist einen trichterförmigen Bereich 42', in dem sich eine Öffnungsbreite 43 der Durchgangsöffnung 25 in der Querrichtung 11 entgegen der Längsrichtung 1 verjüngt. Diese Verjüngung findet mindestens in einem Abschnitt des trichterförmigen Bereichs 42' statt, der sich an die Stelle anschließt an der die Versorgungsleitung 41 in die Durchgangsöffnung 25 mündet. Dieser trichterförmige Bereich 42 stellt eine Düse dar, die die Durchgangsöffnung 25 mit Fett füllt bevor es die Durchgangsöffnung 25 an der in der Längsrichtung 1 gesehenen Rückseite verlassen kann. Auf diese Weise wird ein homogener Fettauftrag erreicht.

Damit der trichterförmige Bereich 42 und damit die zuvor genannte Düsenwirkung an Fahrdrähte 14 verschiedener Leiterquerschnitte angepasst werden kann, ist der trichterförmige Bereich 42 als Einsatz ausgebildet, der sich in die Nut 24 einsetzen lässt. Auf diese Weise kann der trichterförmige Bereich 42 durch Austausch des Einsatzes in einfacher Weise angepasst werden.

In der Längsrichtung 1 gesehen vor dem trichterförmigen Bereich 42' ist in der Durchgangsöffnung 25 eine Führungshülse 44 angeordnet. Die Führungshülse 44 besitzt einen nicht weiter referenzierten Durchgang, in dem der Fahrdraht 14 in der Höhenrichtung 9 und der Querrichtung 11 formschlüssig gehalten werden kann. Auf diese Weise korrigiert die Führungshülse 44 die Positionierung des Fahrdrahtes 14 beim Eintritt in den trichterförmigen Bereich 42' in einer bestimmten Winkellage um die Längsrichtung 1 herum sowie in der Querrichtung 11, so dass der Druck des Fettes beim Auftragen von in der Querrichtung 11 gesehenen beiden Seiten gleichmäßig wirkt. Die oben genannten Umlenkrollen 36 positionieren damit den Fahrdraht 14 grob vor, während die Führungshülse 44 eine Feinpositionierung vornimmt und den Fahrdraht 14 exakt mittig sowie in einer fest definierten Drehlage in den trichterförmigen Bereich 42' einführt.

Für ein einfaches Aufsetzen auf den Fahrdraht 14 ist die Führungshülse 44 aus einer ersten Führungshülsenhälfte 45 und einer zweiten Führungshülsenhälfte 46 aufgebaut, die sich durch Zusammenführen in beziehungsweise entgegen der Querrichtung 11 zur Führungshülse 44 zusammensetzen lassen. Die zusammengesetzte Führungshülse 44 ist in einer Führungshülsenschiene 47 im Führungskörperteil 22 gehalten.

Im Einsatz wird der Fahrdraht 14 in eine der Führungshülsenhälften 45, 46 eingesetzt und die Führungshülse 44 durch Aufsetzen der entsprechend anderen Führungshülsenhälfte 46, 45 in beziehungsweise gegen die Querrichtung 11 geschlossen. Die zusammengesetzte Führungshülse 44 lässt sich nun in die Führungshülsenschiene 47 einsetzen.

In der Längsrichtung 1 gesehen, auf der der Führungshülse 44 gegenüberliegenden Seite des tricherförmigen Bereiches 42 ist eine Abstreifhülse 48 angeordnet. Die Abstreifhülse 48 besitzt analog zur Führungshülse 44 einen Durchgang, in dem allerdings in der Höhenrichtung 9 gesehen an der Oberseite eine entgegen der Höhenrichtung 9 ausgerichtete Nase 49 angeordnet ist, die auf eine in der Höhenrichtung 9 gesehenen Oberseite des Fahrdrahtes 14 drückt. In der Querrichtung 11 gesehen links und rechts der Nase 49 sind so Hohlräume ausgebildet, durch die Fett die Abstreifhülse 48 passieren und auf den Fahrdraht 14 aufgetragen werden kann. Eine in Querrichtung 11 gesehene Nasenbreite 50 der Nase 49 ist dabei so gewählt, dass sich die Hohlräume an den Stellen des Fahrdrahtes 14 befinden, an denen die Klemmstellen 19 beim Einklemmen in der Stromschiene 4 vorgesehen sind.

Die Abstreifhülse 48 ist dabei aus einer unteren Abstreifhülsenhälfte 51 und einer oberen Abstreifhülsenhälfte 52 aufgebaut, die sich durch Zusammenführen in beziehungsweise entgegen der Höhenrichtung 9 zusammensetzen lässt. Zur Montage der Einfettvorrichtung 20 werden die untere Abstreifhülsenhälfte 51 in eine entsprechende Abstreifhülsenschiene 53 im Führungskörperteil 22 sowie die den trichterförmigen Bereich 42' bildende Einlage in die Nut 24 eingesetzt. Dann wird der Fahrdraht 14, um den die Führungshülse 44 in der oben beschriebenen Weise gelegt ist, in die untere Abstreifhülsenhälfte 51 und den trichterförmigen Bereich 42' eingelegt, wobei die Führungshülse 44 in die Führungshülsenschiene 47 in der oben beschriebenen Weise eingesetzt wird. Nun wird die obere Abestreifhülsenhälfte 52 in die Abstreifhülsenschiene 53 so eingesetzt, dass die Abstreifhülse 48 zusammengesetzt wird. Die Einfettvorrichtung 20 in diesem Montagezustand ist in Fig. 4 dargestellt. Abschließend wird das Abdeckteil 23 auf das Führungskörperteil 22 in der oben genannten Weise aufgesetzt und festgeschraubt. Nun lässt sich das Fett über die Versorgungsleitung 41 in die Durchgangsöffnung 25 im Bereich des trichterförmigen Bereichs 42' einleiten und das Fett in der bereits beschriebenen Weise auf den Fahrdraht 14 auftragen.

Um einen Fettauftrag an der Kontaktstelle des Pantographen des Fahrdrahtes 14 weitestgehend zu vermeiden, ist Durchgangsöffnung 25 an einer in der Höhenrichtung 9 gesehenen Bodenseite an eine Form des Fahrdrahtes 14 angepasst. Auf diese Weise wird der Fahrdraht 14 an der Bodenseite der Durchgangsöffnung 25 in der Höhenrichtung 9 und in der Querrichtung 11 formschlüssig aufgenommen, so dass an diese Stelle kein Fett gelangen kann. Die Nase 49 drückt dabei den Fahrdraht 14 gegen die Bodenseite und unterstützt damit die Fettfreiheit des Fahrdrahtes 14 an der Kontaktstelle zum Pantographen. So ist sichergestellt, dass das Fett auf den Fahrdraht 14 tatsächlich nur im Bereich der Klemmstellen 19 und nirgends anders aufgetragen wird.

Nachstehend wird anhand der Figs. 4 und 5 der Fettauftrag näher erläutert, die die Einfettvorrichtung 20 mit einem Fahrdraht 14 zeigen, der in der oben beschriebenen Weise in die Durchgangsöffnung 25 eingelegt ist.

In den Fig. 4 und 5 ist das Fett zu sehen, welches mit der Einfettvorrichtung 20 auf den Fahrdraht 14 aufgetragen wird. Es ist mit dem Bezugszeichen 54 versehen.

Das Fett 54 wird über die oben genannte Zufuhrleitung bereitgestellt. die in den Fig. 4 und 5 mit dem Bezugszeichen 55 versehen ist. Nachdem der Fahrdraht 14 in die Einfettvorrichtung 20 eingelegt ist, wird die Zufuhrleitung 55 über eine Armatur, hier in Form eines als Hahn 56 ausgebildeten Absperrventils an Anschlussbuchse 42 angeschlossen. Aufgabe des Hahns 56 ist es, einen Rohrquerschnitt zwischen der Zufuhrleitung 55 und der Anschlussbuchse 42 einstellen, um die Menge an Fett pro Zeit aus der Zufuhrleitung 55 in die Durchgangsöffnung 25 und damit Zufuhrrate von Fett in die Durchgangsöffnung 25 zu beeinflussen. Die Einstellung des Rohrquerschnittes lässt sich am Hahn 56 über einen Schieberschlüssel in Form eines Hebels 57 vornehmen, der um eine nicht weiter gezeigte Drehachse drehbar gelagert ist. Damit der Hebel mit einem ausreichend hohen Feingefühl benutzt werden kann, sollte er mindestens 5 cm lang sein.

Neben dem Anschluss der Einfettvorrichtung 20 an die Zufuhrleitung 55 werden die Ösenschrauben 34 ferner mit der oben genannten Zugvorrichtung verbunden. Von dieser Zugvorrichtung sind in Fig. 4 lediglich Zugseile 58 zu sehen. Zweckmäßigerweise kann die Zugvorrichtung ein sich entlang der Längsrichtung 1 bewegender Fahrkorb sein, in dem das Bedienpersonal steht. Die Ösenschrauben 34 der Einfettvorrichtung 20 können dann über die Zugseile 58 mit dem Fahrkorb verbunden werden.

Sind der Fahrdraht 14 zum Einfetten vor der Installation in der Stromschiene 4 in die Einfettvorrichtung 20 in der oben beschriebenen Weise eingelegt, die Zufuhrleitung 55 an der Anschlussbuchse 42 angeschlossen und Einfettvorrichtung 20 über die Zugseile 58 mit dem Fahrdraht verbunden, dann wird der Fahrkorb beispielsweise getragen auf einem sich auf dem Gleis 3 bewegenden Schienenfahrzeug in der Längsrichtung 1 in Bewegung gesetzt, wodurch die Einfettvorrichtung 20 mitgezogen wird. Das Bedienpersonal im Fahrkorb dreht nun stetig am Hebel 57, so dass sich der oben genannte Rohrquerschnitt zwischen der Zufuhrleitung 55 und der Durchgangsöffnung 25 immer weiter öffnet, und sich die Zufuhrrate von Fett 54 in die Durchgangsöffnung 25 immer weiter erhöht. Auf diese Weise wird das Fett 54 in der in Fig. 5 gezeigten Weise auf den die Einfettvorrichtung 20 an der in Längsrichtung 1 gesehenen Rückseite verlassenden Fahrdraht 14 aufgetragen.

Dreht das Bedienpersonal den Hebel 57 zu weit auf, so dass das Fett 54 an der Rückseite der Einfettvorrichtung 20 nicht nur auf den Fahrdraht 14 aufgetragen wird sondern an der Rückseite beginnt herunterzulaufen und mit Tropfen 67 herunterzutropfen, weiß das Bedienpersonal, dass die Zufuhrrate zu hoch ist, um alles aus Fett 54 aus der Zufuhrleitung 55 auf den Fahrdraht 14 aufzutragen. Ab da stoppt die Bedienperson damit, den Hebel 57 aufzudrehen.

Gegebenenfalls dreht das Bedienpersonal den Hebel 57 wieder leicht zu, bis das Fett 54 aufhört Tropfen 67 zu bilden und an der Rückseite der Einfettvorrichtung 20 herunterzutropfen.

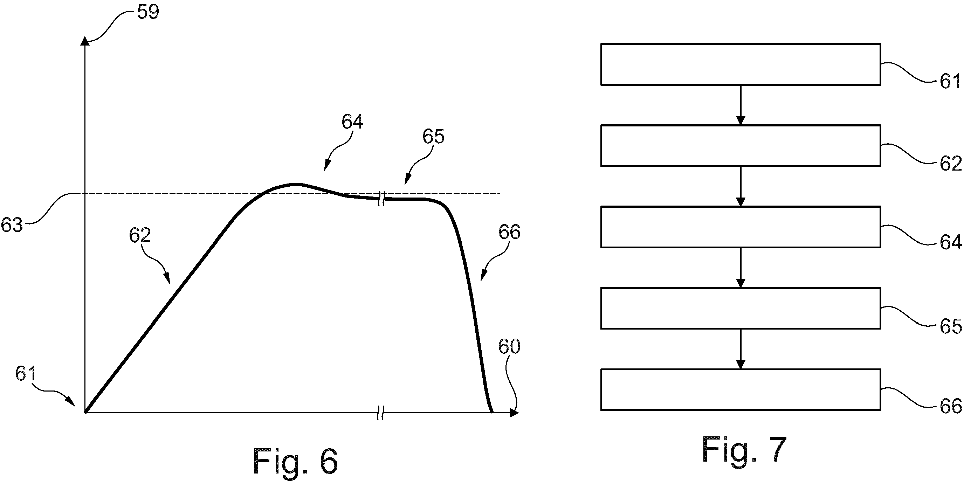

Abschließend soll das zum Auftragen des Fettes 54 auf den Fahrdraht 14 durchzuführende Verfahren noch einmal anhand der Fig. 5 und 6 zusammengefasst werden. Fig. 5 zeigt ein Diagramm, in dem die oben genannte Zufuhrrate des Fettes 54 mit dem Bezugszeichen 59 versehen und über die Zeit 60 aufgetragen ist, während Fig. 6 ein Ablaufdiagramm der einzelnen durchzuführenden Schritte zeigt.

Zunächst werden in einem Vorbereitungsschritt 61 der Fahrdraht 14 in die Einfettvorrichtung 20 eingelegt, die Zufuhrleitung 55 über den Hahn 56 an die Anschlussbuchse 42 angeschlossen und die Einfettvorrichtung 20 über die Zugseile 58 mit dem Fahrkorb verbunden. Dieser Schritt findet im Diagramm der Fig. 5 ganz am Anfang statt.

Danach werden in Öffnungsschritt 62 der Fahrkorb beschleunigt und gleichzeitig der Hebel 57 zum Öffnen der Zufurleitung 55 zur Durchgangsöffnung 25 hin gedreht, so dass das Fett 54 mit einer steigenden Zufuhrrate 59 in die Durchgangsöffnung eingeleitet wird.

Der Öffnungsschritt 62 findet statt, bis die Zufuhrrate 59 eine Grenzzufuhrrate 63 überschreitet, bei der das Fett 54 an der in der Längsrichtung 1 gesehenen Rückseite der Einfettvorrichtung 20 entgegen der Höhenrichtung 9 beginnt herunterzulaufen und Tropfen 67 zu bilden. Ab diesem Zeitpunkt wird der Hebel 57 zum Schließen der Zufurleitung 55 zur Durchgangsöffnung 25 hin langsam zurückgedreht, bis das Fett 54 an der in der Längsrichtung 1 gesehenen Rückseite der Einfettvorrichtung 20 entgegen der Höhenrichtung 9 aufhört herunterzulaufen und Tropfen 67 zu bilden.

In diesem Zustand fahrt der Fahrkorb mit konstanter Geschwindigkeit, so dass das Fett 54 konstant und mit gleichbleibender Schichtdicke in einem Auftrageschritt 65 auf den Fahrdraht 14 aufgetragen wird. In Fig. 5 ist das Diagramm an Stelle des Auftrageschritts 65 unterbrochen dargestellt.

Das Verfahren wird in einem Abschlussschritt 66 durch vollständiges Schließen des Hebels 57 beendet. Zu diesem Zeitpunkt kann auch der Fahrkorb angehalten werden.

## Patentansprüche

1. Verfahren zum Einfetten eines Fahrdrahtes (14) zur elektrischen Energieversorgung eines Pantographen eines Schienenfahrzeuges, umfassend:
- Einlegen des Fahrdrahtes (14) in eine Durchgangsöffnung (25) eines sich in einer Längsrichtung (1), einer rechtwinklig zur Längsrichtung (1) liegenden Querrichtung (11) und einer rechtwinklig zur Längsrichtung (1) und rechtwinklig zur Querrichtung (11) liegenden Höhenrichtung (9) erstreckenden Grundkörpers (21), wobei die Durchgangsöffnung (25) den Grundkörper (21) in der Längsrichtung (1) gesehen von einer Vorderseite zu einer in der Längsrichtung (1) gesehenen Rückseite hin durchdringt, und
- Beschleunigen des Grundkörpers (21) in der Längsrichtung (1), so dass der Fahrdraht (14) durch die Durchgangsrichtung bewegt wird, **gekennzeichnet durch**
- Einleiten von Fett (54) in die Durchgangsöffnung (25), durch die sich der Fahrdraht (14) bewegt mit einer Zufuhrrate (59), bei der das eingeleitete Fett (54) an der Rückseite des Grundkörpers (21) aus der Durchgangsöffnung (25) mit einer vorbestimmten Bedingung (63) austritt.

2. Verfahren nach Anspruch 1, wobei das an der Rückseite des Grundkörpers (21) aus der Durchgangsöffnung (25) austretende Fett (54) bei der vorbestimmten Bedingung (53) frei von Bewegungskomponenten winklig zur Längsrichtung (1) ist.

3. Verfahren nach Anspruch 1 oder 2, wobei die Zufuhrrate (59) in Abhängigkeit der Beschleunigung des Grundkörpers (1) in der Längsrichtung (1) erhöht wird.

4. Verfahren nach einem der vorstehenden Ansprüche, wobei vor dem Einleiten von Fett in die Durchgangsöffnung (25) zwischen einer Einleitestelle (41) und der Rückseite des Grundkörpers (21) in die Durchgangsöffnung (25) ein einen Querschnitt der Durchgangsöffnung (25) verjüngendes Verjüngungselement /52(eingesetzt wird.

5. Verfahren nach einem der vorstehenden Ansprüche, wobei das in die Durchgangsöffnung (25) einzuleitende Fett (54) durch eine Armatur (56) geleitet wird, die zur Reduktion der Zufuhrrate (59) betätigt wird.

6. Einfettvorrichtung (20) zum Einsatz in einem Verfahren nach einem der vorstehenden Ansprüche, umfassend:
- den Grundkörper (21) mit der Durchgangsöffnung (25), durch die der Fahrdraht (14) in der Längsrichtung (1) durchschiebbar ist, und
- die in die Durchgangsöffnung (25) führende Versorgungsleitung (41), und
- ein aus Sicht der Durchgangssöffnung (25) vor der Versorgungsleitung (41) angeordnete Armatur (56) zum Einstellen der Zufuhrrate (59).

7. Einfettvorrichtung (20) nach Anspruch 6, wobei die Armatur (56) ein Absperrventil ist.

8. Einfettvorrichtung (20) nach Anspruch 7, wobei das Absperrventil (56) als Schieberschlüssel (57) einen um eine Drehachse drehbaren Hebel mit einer Länge von mindestens 5 cm umfasst.
